# EUROPÄISCHE PATENTSCHRIFT

(11) **EP 2 740 963 B1**
(45) Veröffentlichungstag und Bekanntmachung des Hinweises auf die Patenterteilung: **27.07.2016**
(21) Anmeldenummer: 13159072.1
(22) Anmeldetag: 13.03.2013
(51) Int. Cl.: F16F 9/348, F16F 9/56

(54) **Verstelleinrichtung**
Displacement device
Dispositif de réglage

(30) Priorität: 02.04.2012 DE 102012102828
(43) Veröffentlichungstag der Anmeldung: 11.06.2014
(73) Patentinhaber: Stabilus GmbH, 56070 Koblenz (DE)
(72) Erfinder: Terschanski, Michael, 55494 Rheinböllen (DE)
(74) Vertreter: Klein, Thomas

(56) Entgegenhaltungen:
- DE-A1- 2 950 888
- DE-A1- 3 432 604
- DE-A1-102007 038 800
- DE-C1- 10 011 693
- US-A- 5 106 065

## Beschreibung

Die Erfindung bezieht sich auf eine Verstelleinrichtung zum Verstellen eines Bauteils, insbesondere einer Stuhllehne, mit einer Gasfeder, die einen Zylinder aufweist, der an seinem einen Ende geschlossen ist und in dem ein Kolben verschiebbar angeordnet ist, der den mit einem unter Überdruck stehenden Fluid gefüllten Zylinder in eine erste und eine zweite Zylinderkammer unterteilt sowie einseitig eine Kolbenstange aufweist, die die dem geschlossenen Ende des Zylinders abgewandte zweite Zylinderkammer durchragt und abgedichtet aus dem Zylinder herausgeführt ist, wobei durch den Überdruck in der ersten Zylinderkammer der Kolben mit einer Ausschubkraft beaufschlagt ist, mit einer von der zweiten Zylinderkammer zur ersten Zylinderkammer führenden Verbindung, in der ein **ers**tes Ventil und diesem nachgeschaltet ein Strömungsdrosselkanal angeordnet ist, die einen gedrosselten Fluidstrom von der zweiten in die erste Zylinderkammer ermöglicht und in der entgegengesetzten Strömungsrichtung sperrt und mit einem manuell betätigbaren Verbindungsventil, durch das die erste und zweite Zylinderkammer miteinander verbindbar sind.

Bei derartigen Verstelleinrichtungen kann bei nicht belasteter Verstelleinrichtung die Kolbenstange mit dem Kolben aufgrund des Strömungsdrosselkanals mit einer geringen Ausschubgeschwindigkeit aus dem Zylinder ausfahren, während in Einschubrichtung eine Blockierung erfolgt, die durch eine manuelle Öffnung des Verbindungsventils aufgehoben wird, so daß unter Einschubbelastung der Kolbenstange diese zu einer gewünschten Position einschiebbar ist.

Solch Verstelleinrichtungen werden z.B. zur Verstellung von Sitzrückenlehnen, insbesondere von Russitzrückenlehnen benutzt. Zur individuellen Einstellung der Sitzrückenlehne wird manuell das Verbindungsventil geöffnet, wodurch die Blocklerwirkung der Gasfeder außer Kraft gesetzt wird und ein freies Verstellen der Sitzrückenlehne ermöglicht wird. Durch Beendigung der manuellen Betätigung des Verbindungsventils wird die Blockierfunktion der Gasfeder wieder aktiviert und die Sitzlehne bleibt in der eingestellten Position fixiert, sofern die Rückenlehne und damit die Kolbenstange in Einschubrichtung durch eine auf dem Sitz sitzende Person belastet ist.

Ist die Rückenlehne unbelastet, kommt es zu einem langsamen Ausschieben der Kolbenstange und somit zu einem langsamen Zurückstellen der Sitzlehne in eine Ausgangsstellung, in der die Kolbenstange sich in ihrer maximal ausgefahrenen Position befindet.

Da der Strömungsdrosselkanal der bekannten Verstelleinrichtung nicht prozeßsicher, d.h ausreichend wiederholgenau herstellbar oder einstellbar ist, kommt es zu einer großen Streuung der Ausschubzeiten der Kolbensstangen, was zu unterschiedlichen Rückstellgeschwindigkeiten der Sitzlehnen führt.

Aus der DE 100 11 693 C1 ist eine Verstelleinrichtung zum Verstellen eines Bauteils, insbesondere einer Stuhllehne bekannt, mit einer Gasfeder, die einen Zylinder aufweist, der an seinem einen Ende geschlossen ist und in dem ein Kolben verschiebbar angeordnet ist, der den mit einem unter Überdruck stehenden Fluid gefüllten Zylinder in eine erste und eine zweite Zylinderkammer unterteilt sowie einseitig eine Kolbenstange aufweist, die die dem geschlossenen Ende des Zylinders abgewandte erste Zylinderkammer durchragt und abgedichtet aus dem Zylinder herausgeführt ist. Dabei ist durch den Überdruck in der zweiten Zylinderkammer der Kolben mit einer Ausschubkraft beaufschlagt. Mit einem manuell betätigbaren Verbindungsventil, durch das die erste und zweite Zylinderkammer miteinander verbindbar sind.

Aufgabe der Erfindung ist es daher eine Verstelleinrichtung der eingangs genannten Art zu schaffen, die bei einfachem und kostengünstig herstellbarem Aufbau ein Ausschieben von Kolben und Kolbenstange mit einer geringen Ausschubgeschwindigkeit hoher Wiederholgenauigkeit ermöglicht.

Diese Aufgabe wird erfindungsgemäß dadurch gelöst, daß bei in Einschubrichtung belasteter Kolbenstange und geschlossenem Verbindungsventil durch den höheren Druck in der ersten Zylinderkammer gegenüber dem Druck in der zweiten Zylinderkammer ein Ventilglied des ersten Ventils den Durchgang des ersten Ventils von der ersten Zylinderkammer zur zweiten Zylinderkammer sperrt, wobei der Strömungsdrosselkanal als Drossellabyrinthkanal ausgebildet ist.

Dieser Drossellabyrinthkanal ist auf einfache Weise mit einem eng toleriert definierten Querschnitt sowie eng toleriert definierter Länge herstellbar, so daß die Drosselwirkung und damit auch die definierte Ausschubgeschwindigkeit mit nur geringer Streuungsbreite erreicht wird.

Damit ist eine Verwendung zur Neigungseinstellung der Lehne eines Stuhles, insbesondere der Lehne eines Sitzes in einem Bus möglich. Die Fahrgäste können so während der Reise individuell die Neigung ihrer schwenkbaren Sitzlehne einstellen. Bei kurzzeitigem Verlassen des Sitzes erfolgt keine merkbare Verstellung.

Werden die Sitze aber für längere Zeit wie z.B. fünfzehn Minuten nicht benutzt, so werden alle Sitzlehnen selbsttätig einheitlich in ihre Ausgangsstellung verstellt.

Vorzugsweise ist das Fluid im Zylinder ein Hydrauliköl.

Zu einer geringen Baulänge führt es, wenn der Drossellabyrinthkanal sich in einer oder mehreren zur Längsachse des Zylinders rechtwinkligen Ebenen erstreckt.

Eine große Länge des Drosselkanals und damit eine hohe Drosselung bei geringer Baugröße werden dadurch erreicht, daß der Drossellabyrinthkanal sich konzentrisch zur Längsachse des Zylinders erstreckt.

Zu einer einfachen und kostengünstig sowie engtolerierbaren Herstellbarkeit an einem separaten Bauteil führt es, wenn der Drossellabyrinthkanal in einem scheibenartigen Drosselelement ausgebildet ist, wobei ein erstes Ende des Drossellabyrinthkanals mit der zum Ventil führenden Verbindung in Verbindung steht und ein zweites Ende des Drossellabyrinthkanals zur Seite der ersten Zylinderkammer mündet.

Sind mehrere scheibenartige Drosselelemente ein Drosselelementpaket bildend axial hintereinander angeordnet, wobei in Strömungsrichtung jeweils das erste Ende des Drossellabyrinthkanals mit dem zweiten Ende des davorliegenden Drosselelements verbunden ist, so ist eine noch weiter erhöhte Drosselung und damit noch geringere Ausfahrgeschwindigkeit der Kolbenstange erreichbar. Gleichzeitig sind durch die Wahl der Anzahl an scheibenartigen Drosselelementen baukastenartig auch unterschiedliche Ausschubgeschwindigkeiten auswählbar.

Zu einer einfachen Montierbarkeit führt es, wenn das scheibenartige Drosselelement oder das Drosselelementepaket in einer im Kolben ausgebildeten entsprechenden topfartigen Ausnehmung angeordnet sind.

Dabei kann der Drossellabyrinthkanal besonders einfach und eng toleriert herstellbar in einer Stirnfläche des scheibenartigen Drosselelements als axial offener Drossellabyrinthkanal ausgebildet sein, der von dem Boden der topfartigen Ausnehmung oder von einem weiteren scheibenartigen Drosselelement oder von einer koaxial an dem Drosselelement anliegenden Abdeckscheibe verschlossen ist.

Vorzugsweise weisen das scheibenartige Drosselelement oder die scheibenartigen Drosselelemente des Drosselelementepakets einen kreisförmigen Querschnitt auf und sind an ihrer radial umlaufenden Mantelfläche mit einer radial umlaufenden Ringnut versehen, in die ein Dichtungsring eingesetzt ist, der dichtend an der Wand der topfartigen Ausnehmung entsprechend kreisförmigen Querschnitts in Anlage ist.

Zur einfachen Befestigung der Drosselelemente an dem Kolben kann der Kolben an seinem der ersten Arbeitskammer zugewandten Endbereich ein Außengewinde aufweisen, auf das eine Überwurfmutter aufschraubbar ist, durch die das Drosselelement oder das Drosselelementpaket direkt oder indirekt gegen den Boden der topfartigen Ausnehmung spannbar ist.

In einfacher Ausbildung kann das Ventil eine an der radial umlaufenden Mantelfläche des Kolbens und mit der ersten Zylinderkammer verbundene, radial umlaufende Nut aufweist, in der ein Dichtring geringerer axialer Erstreckung als der Nut zwischen einer der der ersten Zylinderkammer näheren ersten Nutseitenwand und einer der zweiten Zylinderkammer näheren zweiten Nutseitenwand axial bewegbar angeordnet ist, der mit seinem Außenumfang dichtend an der Innenwand des Zylinders in Anlage ist und zwischen dessen Innenumfang und dem Boden der Nut ein Ringspalt gebildet ist, von dem die Verbindung zu dem Drossellabyrinthkanal führt.

Das Verbindungsventil kann Bauraum und Bauteile sparend eine im Kolben koaxial ausgebildete Ventilkammer aufweisen, die über einen oder mehrere Kanäle mit der zweiten Zylinderkammer verbunden ist und die eine koaxiale, zur ersten Zylinderkammer gerichtete Ventilöffnung besitzt, die von einem Ventilglied verschließbar ist, das mittels eines die Ventilkammer koaxial durchragenden, manuell betätigbaren Ventilstifts koaxial in Richtung zur ersten Zylinderkammer aus seiner Schließstellung in seine Öffnungsstellung bewegbar ist, wobei die Ventilöffnung über einen koaxialen Durchlaß in dem scheibenartigen Drosselelement oder dem Drosselelementepaket mit der ersten Arbeitskammer verbunden ist.

Zum Schließen des Verbindungsventils kann in der zylindrischen Wand der Ventilöffnung eine radial umlaufende Ringnut angeordnet sein, in der ein Dichtring eingesetzt ist, wobei der Ventilstift im Bereich der Ventilkammer einen gegenüber der Ventilkammer reduzierten Durchmesser aufweist und an seinem in die Ventilöffnung ragenden Bereich einen etwa dem Innendurchmesser des Dichtrings entsprechenden Durchmesser aufweist, an dem in der Schließstellung des Ventilstifts der Dichtring einen Ventildurchgang absperrend in Anlage ist und wobei in der Öffnungsstellung des Ventilstifts sich der Bereich reduzierten Durchmessers im Bereich des Dichtrings befindet.

Das Drosselelement oder das Drosselelementpaket kann koaxial an dem Kolben in Anlage sein und die Nutseitenwand der Ringnut auf der der ersten Ventilkammer zugewandten Seite bilden.

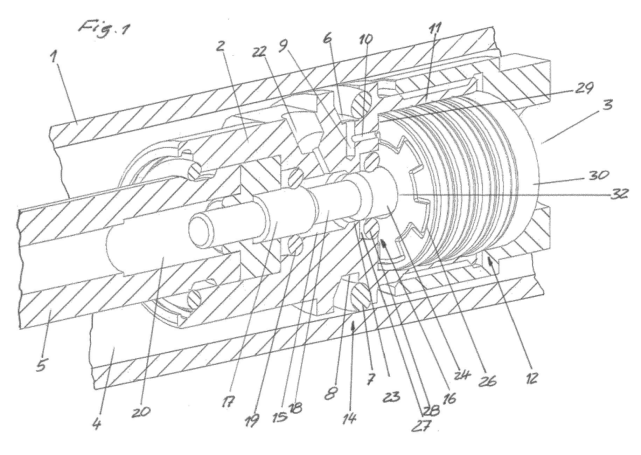

Ausführungsbeispiele der Erfindung sind in der Zeichnung dargestellt und werden im folgenden näher beschrieben. Es zeigen
- Figur 1: eine perspektivische Darstellung eines Ausschnitts einer Verstelleinrichtung in Bereich des Kolbens

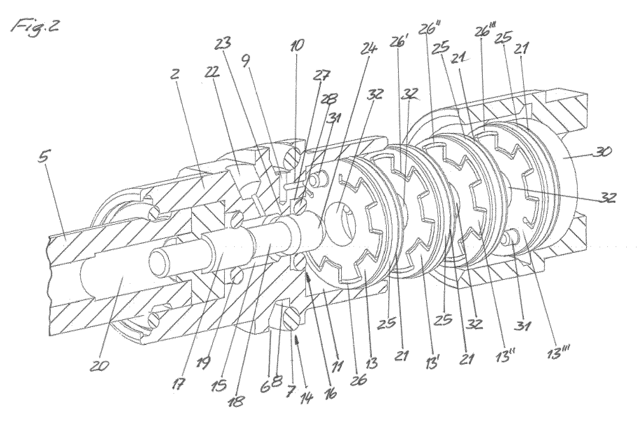

- Figur 2: die Verstelleinrichtung nach Figur 1 in perspektivischer Explosionsdarstellung.

Die in den Figuren dargestellte Verstelleinrichtung weist eine Gasfeder mit einem Zylinder 1 auf, in dem ein Kolben 2 axial verschiebbar angeordnet ist, der den mit einem unter Druck stehenden ölgefüllten Innenraum des Zylinders 1 in eine erste Zylinderkammer 3 und eine zweite Zylinderkammer 4 unterteilt. An dem Ende der ersten Zylinderkammer 3 ist der Innenraum des Zylinders 1 durch einen verschiebbaren Trennkolben von der ersten Zylinderkammer 3 abgetrennt und bildet einen mit unter Druck stehendem Gas gefüllten Gasraum.

Auf der Seite der ersten Zylinderkammer 3 ist der Zylinder 1 an seinem nicht dargestellten Ende geschlossen und kann mit dem einen der zu verstellenden Bauteile, z.B. einem feststehenden Bauteil eines Kraftfahrzeugs gelenkig verbunden werden.

Durch die zweite Zylinderkammer 3 ist eine mit ihrem einen Ende fest mit dem Kolben 2 verbundene Kolbenstange 5 koaxial hindurch und mittels einer nicht dargestellten Dicht- und Führungseinheit abgedichtet aus dem Zylinder 1 herausgeführt.

Das freie Ende der Kolbenstange 5 kann z.B. an einer zu verstellenden Sitzlehne des Kraftfahrzeugs angelenkt sein.

An der an der Innenwand des Zylinders 1 verschiebbar geführten zylindrischen Mantelfläche des Kolbens 2 ist eine radial umlaufende Nut 6 ausgebildet , in der ein an der Innenwand des Zylinders 1 dichtend anliegender Dichtring 7 angeordnet ist, der ein Ventilglied eines Ventils 14 bildet.

Da die axiale Erstreckung des Dichtrings 7 geringer ist als die axiale Erstreckung der Nut 6 ist der Dichtring 7 in der Nut 6 axial bewegbar.

Der Dichtring 7 ist an seiner dem Nutgrund 8 zugewandten Seite unterströmbar.

Von dem Nutgrund 8 aus führt ein im Kolben 2 ausgebildeter radialer Verbindungskanal 9 über ein axiales Verbindungskanalstück 10 in eine koaxiale topfartige zur ersten Zylinderkammer 3 hin offene Ausnehmung 11 kreisförmigen Querschnitts im Kolben 2.

In der Ausnehmung 11 ist ein Drosselelementepaket 12 angeordnet, das aus vier koaxial aneinanderliegenden entsprechend scheibenartigen Drosselelementen 13 bis 13"' kreisförmigen Querschnitts besteht.

Die Drosselelemente 13 bis 13"' sind an ihrer radial umlaufenden Mantelfläche mit einer radial umlaufenden Ringnut 21 versehen, in die ein Dichtring 25 eingesetzt ist, der dichtend am Grund der Ringnut 21 und an der zylindrischen Wand der Ausnehmung 11 in Anlage ist.

Die Drosselelemente 13 bis 13'" weisen an ihrer der zweiten Zylinderkammer 4 zugewandten Stirnfläche einen sich konzentrisch zur Längsachse des Zylinders 1 erstreckenden, offenen Drossellabyrinthkanal 26 bis 26'" auf.

Die Mündung des Verbindungskanalstücks 10 liegt axial dem in Strömungsrichtung Anfang des Drossellabyrinthkanals 26 gegenüber und ist so mit diesem verbunden, während der Drossellabyrinthkanal 26 ansonsten von dem Boden 29 der Ausnehmung 11 abgedeckt und axial verschlossen ist.

Das in Strömungsrichtung Ende des Drossellabyrinthkanals 26 mündet auf der der ersten Zylinderkammer 3 zugewandten Stirnseite des Drosselelements 13 nach außen und liegt dem in Strömungsrichtung Anfang des Drossellabyrinthkanals 26' in dem Drosselelement 13' axial gegenüber.

Ansonsten ist der Drossellabyrinthkanal 26' durch das Drosselelement 13 abgedeckt und axial verschlossen.

In der gleichen Weise sind die Drosselelemente 13" und 13'" mit ihren Drossellabyrinthkanälen 26" und 26'" einander zugeordnet, so daß ein aus den hintereinandergeschalteten Drossellabyrinthkanälen 26 bis 26'" bestehender Gesamtdrossellabyrinthkanal gebildet ist, der durch eine das Drosselelementepaket 12 koaxial zur ersten Zylinderkammer 3 hin abschließende Abdeckscheibe in die erste Arbeitskammer 3 mündet.

Um die Zueinanderzuordnung der Drossellabyrinthkanäle 26 bis 26'" auf einfache Weise zu gewährleisten, weisen die als Gleichteile ausgebildeten Drosselelemente 13 bis 13"' auf ihrer der ersten Zylinderkammer 3 zugewandten Stirnfläche Positioniervertiefungen auf, in die auf der der zweiten Zylinderkammer 4 zugewandten Stirnfläche der Drosselelemente 13 bis 13"' hervorstehende Positioniernasen 31 eingreifen.

Die Positioniernase 31 des Drosselelements 13 greift in eine im Boden 29 ausgebildete Positioniervertiefung ein.

In dem Kolben 2 ist weiterhin eine koaxiale zylindrische Ventilkammer 15 eines Verbindungsventils 16 ausgebildet, in der ein Ventilstift 17 axial bewegbar angeordnet ist, der in seinem in der Schließstellung in der Ventilkammer 15 befindlichen Bereich 18 einen geringeren Durchmesser aufweist als die Ventilkammer 15.

Mit seinem der zweiten Zylinderkammer 4 zugewandten Endbereich ragt der Ventilstift 17 durch eine Dichtung 19 abgedichtet in eine durchgehende Koaxialbohrung 20 der rohrartig ausgebildeten Kolbenstange 5.

In der Koaxialbohrung 20 ist eine nicht dargestellte manuell verschiebbare Betätigungsstange angeordnet, die mit ihrem einen Ende zur manuellen Beaufschlagung nach außen ragt.

Mit ihrem anderen Ende ist von der Betätigungsstange der Ventilstift 17 in Richtung zur ersten Zylinderkammer 3 hin verschiebbar beaufschlagbar. In dem Kolben 2 ist ein radialer Kanal 22 ausgebildet, über den die zweite Zylinderkammer 4 mit der Ventilkammer 15 verbunden ist.

Eine koaxiale Ventilöffnung 23 verbindet die Ventilkammer 15 mit der Ausnehmung 11.

Der Ventilstift 17 ragt mit seinem der ersten Zylinderkammer 3 zugewandten Endbereich 24 nicht reduzierten Durchmessers in den Bereich der Ausnehmung 11.

An dem in die Ausnehmung 11 mündenden Ende ist in der Ventilöffnung 23 eine Ringnut 27 ausgebildet, in der ein zweiter Dichtring 28 angeordnet ist.

Der zweite Dichtring 28 umschließt in der Schließstellung des Ventilstifts 17 mit seinem Innenumfang dicht den Endbereich des Ventilstifts 17, so daß der Ventildurchgang des Verbindungsventils 16 geschlossen ist.

In der Öffnungsstellung des Verbindungsventils 16 ist der Ventilstift 17 durch die Betätigungsstange 21 so weit in Richtung der ersten Zylinderkammer 3 verschoben, daß sich sein Bereich 18 reduzierten Durchmessers im Bereich des zweiten Dichtrings 28 befindet, so daß dieses Teil radial innen unterströmbar ist.

Damit ist der Ventilsdurchgang des Verbindungsventils 16 geöffnet.

Bei in Einschubrichtung belasteter Kolbenstange 5 und geschlossenem Verbindungsventil 16 wird durch den höheren Druck in der ersten Zylinderkammer 3 gegenüber dem Druck in der zweiten Zylinderkammer 4 der Dichtring 7 in Anlage an die der zweiten Zylinderkammer 4 nähere Seitenwand der Nut 6 gepreßt und sperrt somit einen Durchgang von der ersten Zylinderkammer 3 zur zweiten Zylinderkammer 4. Die Verstelleinrichtung ist blockiert.

Ist die Kolbenstange 5 bei geschlossenem Verbindungsventil 16 nicht in Einschubrichtung belastet, herrscht ein ausgeglichener Druck in beiden Zylinderkammern 3 und 4. Die größere Fläche der der ersten Zylinderkammer 3 zugewandten Seite des Kolbens 2 führt aber zu einer Ausschubbewegung von Kolben 2 und Kolbenstange 5.

Dabei bewegt sich der Dichtring 7 zu der der ersten Zylinderkammer 3 näheren Seitenwand der Nut 6 und gibt einen Durchgang von der zweiten Zylinderkammer 4 zum Verbindungskanal 9 frei.

Dadurch kann Öl von der zweiten Zylinderkammer 4 über den Verbindungskanal 9, das Verbindungskanalstück 10 zu der Ausnehmung 11 und durch die Drossellabyrinthkanäle 26 bis 26'" zur ersten Zylinderkammer 3 strömen.

Dieser Strömungsweg über die Drossellabyrinthkanäle 26 bis 26'" führt zu einer sehr langsamen Ausschubbewegung von Kolben 2 und Kolbenstange 5.

Soll diese Ausschubbewegung bei unbelasteter Kolbenstange 2 schnell erfolgen, so wird manuell über die Betätigungsstange 21 das Verbindungsventil 16 geöffnet, so daß zusätzlich ein großer Strömungsquerschnitt zur Verfügung steht.

Soll bei belasteter Kolbenstange 5 eine Einschubbewegung erfolgen, so wird manuell das Verbindungsventil 16 geöffnet. Damit kann ungedrosselt Öl von der ersten Zylinderkammer 3 durch den Ventildurchgang des Verbindungsventils 16 und in den Drosselelementen 13 bis 13"' sowie in der Abdeckscheibe 30 koaxiale Durchlässe 32 in die zweite Zylinderkammer 4 strömen.

### Bezugszeichenliste

- 1: Zylinder
- 2: Kolben
- 3: erste Zylinderkammer
- 4: zweite Zylinderkammer
- 5: Kolbenstange
- 6: Nut
- 7: Dichtring
- 8: Nutgrund
- 9: Verbindungskanal
- 10: Verbindungskanalstück
- 11: Ausnehmung
- 12: Drosselelementepaket
- 13: Drosselelement
- 13': Drosselelement
- 13": Drosselelement
- 13"': Drosselelement
- 14: Ventil
- 15: Ventilkammer
- 16: Verbindungsventil
- 17: Ventilstift
- 18: Bereich
- 19: Dichtung
- 20: Koaxialbohrung
- 21: Ringnut
- 22: Kanal
- 23: Ventilöffnung
- 24: Endbereich
- 25: Dichtungsring
- 26: Drossellabyrinthkanal
- 26': Drossellabyrinthkanal
- 26": Drossellabyrinthkanal
- 26'": Drossellabyrinthkanal
- 27: Ringnut
- 28: zweiter Dichtring
- 29: Boden
- 30: Abdeckscheibe
- 31: Positioniernasen
- 32: Durchlässe

## Patentansprüche

1. Verstelleinrichtung zum Verstellen eines Bauteils, insbesondere einer Stuhllehne, mit einer Gasfeder, die einen Zylinder (1) aufweist, der an seinem einen Ende geschlossen ist und in dem ein Kolben (2) verschiebbar angeordnet ist, der den mit einem unter Überdruck stehenden Fluid gefüllten Zylinder (1) in eine erste und eine zweite Zylinderkammer (3, 4) unterteilt sowie einseitig eine Kolbenstange (5) aufweist, die die dem geschlossenen Ende des Zylinders (1) abgewandte zweite Zylinderkammer (4) durchragt und abgedichtet aus dem Zylinder (1) herausgeführt ist, wobei durch den Überdruck in der ersten Zylinderkammer (3) der Kolben (2) mit einer Ausschubkraft beaufschlagt ist, mit einer von der zweiten Zylinderkammer (4) zur ersten Zylinderkammer (3) führenden Verbindung, in der ein erstes Ventil (14) und diesem nachgeschaltet ein Strömungsdrosselkanal angeordnet ist, die einen gedrosselten Fluidstrom von der zweiten in die erste Zylinderkammer (4, 3) ermöglicht und in der entgegengesetzten Strömungsrichtung sperrt, **gekennzeichnet durch** ein manuell betätigbares Verbindungsventil (16), **durch** das die erste und zweite Zylinderkammer (3, 4) miteinander verbindbar sind und, daß bei in Einschubrichtung belasteter Kolbenstange (5) und geschlossenem Verbindungsventil (16) **durch** den höheren Druck in der ersten Zylinderkammer (3) gegenüber dem Druck in der zweiten Zylinderkammer (4) ein Ventilglied des ersten Ventiles (14) den Durchgang des ersten Ventils (14) von der ersten Zylinderkammer (3) zur zweiten Zylinderkammer (4) sperrt, wobei der Strömungsdrosselkanal als Drossellabyrinthkanal (26 bis 26'") ausgebildet ist.

2. Verstelleinrichtung nach Anspruch 1, **dadurch gekennzeichnet, daß** der Drossellabyrinthkanal (26 bis 26"') sich in einer oder mehreren zur Längsachse des Zylinders (1) rechtwinkligen Ebenen erstreckt.

3. Verstelleinrichtung nach Anspruch 2, **dadurch gekennzeichnet, daß** der Drossellabyrinthkanal (26 bis 26"') sich konzentrisch zur Längsachse des Zylinders (1) erstreckt.

4. Verstelleinrichtung nach einem der vorhergehenden Ansprüche, d**a-durch gekennzeichnet,** daß der Drossellabyrinthkanal (26 bis 26"') in einem scheibenartigen Drosselelement (13 bis 13"') ausgebildet ist, wobei ein erstes Ende des Drossellabyrinthkanals (26 bis 26"') mit der zum Ventil (14) führenden Verbindung (9, 10) in Verbindung steht und ein zweites Ende des Drossellabyrinthkanals (26 bis 26"') zur Seite der ersten Zylinderkammer (3) mündet.

5. Verstelleinrichtung nach Anspruch 4, **dadurch gekennzeichnet, daß** mehrere scheibenartige Drosselelemente (13 bis 13"') ein Drosselelementpaket (12) bildend axial hintereinander angeordnet sind, wobei in Strömungsrichtung jeweils das erste Ende des Drossellabyrinthkanals (26 bis 26"') mit dem zweiten Ende des davorliegenden Drosselelements verbunden ist.

6. Verstelleinrichtung nach einem der Ansprüche 4 und 5, **dadurch gekennzeichnet, daß** das scheibenartige Drosselelement (13 bis 13"') oder das Drosselelementepaket (12) in einer im Kolben (2) ausgebildeten entsprechenden topfartigen Ausnehmung (11) angeordnet sind.

7. Verstelleinrichtung nach Anspruch 6, **dadurch gekennzeichnet, daß** der Drossellabyrinthkanal (26 bis 26"') in einer Stirnfläche als axial offener Drossellabyrinthkanal (26 bis 26"') ausgebildet ist, der von dem Boden (29) der topfartigen Ausnehmung (11) oder von einem weiteren scheibenartigen Drosselelement (13 bis 13"') oder von einer koaxial an dem Drosselelement (13"') anliegenden Abdeckscheibe (30) verschlossen ist.

8. Verstelleinrichtung nach einem der Ansprüche 6 und 7, **dadurch gekennzeichnet, daß** das scheibenartige Drosselelement (13 bis 13"') oder die scheibenartigen Drosselelemente (13 bis 13"') des Drosselelementepakets (12) einen kreisförmigen Querschnitt aufweisen und an ihrer radial umlaufenden Mantelfläche mit einer radial umlaufenden Ringnut (21) versehen sind, in die ein Dichtungsring (25) eingesetzt ist, der dichtend an der Wand der topfartigen Ausnehmung (11) entsprechend kreisförmigen Querschnitts in Anlage ist.

9. Verstelleinrichtung nach einem der vorhergehenden Ansprüche, d **a-durch gekennzeichnet,** daß das Ventil (14) eine an der radial umlaufenden Mantelfläche des Kolbens (2) und mit der ersten Zylinderkammer (3) verbundene, radial umlaufende Nut (6) aufweist, in der ein Dichtring (7) geringerer axialer Erstreckung als der Nut (6) zwischen einer der der ersten Zylinderkammer (3) näheren ersten Nutseitenwand und einer der zweiten Zylinderkammer (4) näheren zweiten Nutseitenwand axial bewegbar angeordnet ist, der mit seinem Außenumfang dichtend an der Innenwand des Zylinders (1) in Anlage ist und zwischen dessen Innenumfang und dem Boden der Nut (6) ein Ringspalt gebildet ist, von dem die Verbindung zu dem Drossellabyrinthkanal (26) führt.

10. Verstelleinrichtung nach einem der **Ansprüche 4 bis 9, dadurch gekennzeichnet, daß** das Verbindungsventil (16) eine im Kolben (2) koaxial ausgebildete Ventilkammer 15) aufweist, die über einen oder mehrere Kanäle (22) mit der zweiten Zylinderkammer (4) verbunden ist und die eine koaxiale, zur ersten Zylinderkammer (3) gerichtete Ventilöffnung (23) besitzt, die von einem Ventilglied verschließbar ist, das mittels eines die Ventilkammer (15) koaxial durchragenden, manuell betätigbaren Ventilstiftes (17) koaxial in Richtung zur ersten Zylinderkammer (3) aus seiner Schließstellung in seine Öffnungsstellung bewegbar ist, wobei die Ventilöffnung (23) über einen koaxialen Durchlaß (32) in dem scheibenartigen Drosselelement (13 bis 13"') oder dem Drosselelementepaket (12) mit der ersten Arbeitskammer (3) verbunden ist.

11. Verstelleinrichtung nach Anspruch 10, **dadurch gekennzeichnen,** daß in der zylindrischen Wand der Ventilöffnung (23) eine radial umlaufende Ringnut **(27)** angeordnet ist, in der ein Dichtring (28) eingesetzt ist, wobei der Ventilstift (17) im Bereich der Ventilkammer (15) einen gegenüber der Ventilkammer (15) reduzierten Durchmesser aufweist und an seinem in die Ventilöffnung (23) ragenden Bereich einen etwa dem Innendurchmesser des Dichtrings (28) entsprechenden Durchmesser aufweist, an dem in der Schließstellung des Ventilstifts (17) der Dichtring (28) einen Ventildurchgang absperrend in Anlage ist und wobei in der Öffnungsstellung des Ventilstifts (17) sich der Bereich (18) reduzierten Durchmessers im Bereich des Dichtrings (28) befindet.

## Claims

1. Adjustment device for adjusting a component, in particular a chair back, having a gas spring which has a cylinder (1) which is closed at one end and in which is displaceably arranged a piston (2), which subdivides the cylinder (1), filled with a fluid under positive pressure, into a first and a second cylinder chamber (3, 4) and has, at one end, a piston rod (5) which projects through the second cylinder chamber (4), directed away from the closed end of the cylinder (1), and is guided in a sealed manner out of the cylinder (1), wherein the piston (2) is subjected to a pushingout force as a result of the positive pressure in the first cylinder chamber (3), and having a connection which leads from the second cylinder chamber (4) to the first cylinder chamber (3), which has a first valve (14) and, downstream of the latter, a flow-restricting channel arranged in it and which allows a restricted stream of fluid from the second cylinder chamber (4) into the first cylinder chamber (3) and blocks flow in the opposite flow direction, **characterized by** a manually actuable connecting valve (16), by means of which the first and second cylinder chambers (3, 4) can be connected to one another, and in that, when the piston rod (5) has been subjected to loading in the pushing-in direction and the connecting valve (16) has been closed, the higher pressure in the first cylinder chamber (3) in relation to the pressure in the second cylinder chamber (4) causes a valve member of the first valve (14) to block the through-passage of the first valve (14) from the first cylinder chamber (3) to the second cylinder chamber (4), wherein the flow-restricting channel is designed in the form of a restricting-labyrinth channel (26 to 26"').

2. Adjustment device according to Claim 1, **characterized in that** the restricting-labyrinth channel (26 to 26"') extends in one or more planes at right angles to the longitudinal axis of the cylinder (1).

3. Adjustment device according to Claim 2, **characterized in that** the restricting-labyrinth channel (26 to 26"') extends concentrically in relation to the longitudinal axis of the cylinder (1).

4. Adjustment device according to one of the preceding claims, **characterized in that** the restricting-labyrinth channel (26 to 26"') is formed in a disc-like restricting element (13 to 13"'), wherein a first end of the restricting-labyrinth channel (26 to 26''') is in connection with the connection (9, 10) leading to the valve (14), and a second end of the restricting-labyrinth channel (26 to 26''') opens out to the side of the first cylinder chamber (3).

5. Adjustment device according to Claim 4, **characterized in that** a plurality of disc-like restricting elements (13 to 13''') are arranged axially one behind the other to form a group (12) of restricting elements, wherein the first end of the restricting-labyrinth channel (26 to 26"') is connected in the flow direction in each case to the second end of the restricting element located upstream.

6. Adjustment device according to either of Claims 4 and 5, **characterized in that** the disc-like restricting element (13 to 13''') or the group (12) of restricting elements are arranged in a corresponding cup-like recess (11) formed in the piston (2).

7. Adjustment device according to Claim 6, **characterized in that** the restricting-labyrinth channel (26 to 26"') is made in an end surface in the form of an axially open restricting-labyrinth channel (26 to 26"'), which is closed by the base (29) of the cup-like recess (11) or by a further disc-like restricting element (13 to 13"') or by a covering disc (30) butting coaxially against the restricting element (13"').

8. Adjustment device according to either of Claims 6 and 7, **characterized in that** the disc-like restricting element (13 to 13''') or the disc-like restricting elements (13 to 13''') of the group (12) of restricting elements has or have a circular cross section and is or are provided, on the radially encircling lateral surface, with a radially encircling annular groove (21), into which is inserted a sealing ring (25) which is in sealing abutment against the wall of the cup-like recess (11) of correspondingly circular cross section.

9. Adjustment device according to one of the preceding claims, **characterized in that** the valve (14) has a radially encircling groove (6) which is located on the radially encircling lateral surface of the piston (2), and is connected to the first cylinder chamber (3), and in which a sealing ring (7) of smaller axial extent than the groove (6) is arranged such that it can be moved axially between a first groove side wall, which is closer to the first cylinder chamber (3), and a second groove side wall, which is closer to the second cylinder chamber (4), said sealing ring (7) having its outer circumference in sealing abutment against the inner wall of the cylinder (1), and an annular gap, from which leads the connection to the restricting-labyrinth channel (26), being formed between the inner circumference of said sealing ring (7) and the base of the groove (6).

10. Adjustment device according to one of Claims 4 to 9, **characterized in that** the connecting valve (16) has a valve chamber (15) which is formed coaxially in the piston (2), is connected to the second cylinder chamber (4) via one or more channels (22) and has a coaxial valve opening (23), which is directed towards the first cylinder chamber (3) and can be closed by a valve member which can be moved coaxially, in the direction of the first cylinder chamber (3), from its closed position into its open position by means of a manually actuable valve pin (17), which projects coaxially through the valve chamber (15), wherein the valve opening (23) is connected to the first operating chamber (3) via a coaxial through-opening (32) in the disc-like restricting element (13 to 13''') or the group (12) of restricting elements.

11. Adjustment device according to Claim 10, **characterized in that** the cylindrical wall of the valve opening (23) has arranged in it a radially encircling annular groove (27), in which a sealing ring (28) is inserted, wherein the valve pin (17), in the region of the valve chamber (15), has a diameter which is reduced in relation to the valve chamber (15) and, in its region which projects into the valve opening (23), has a diameter which corresponds approximately to the internal diameter of the sealing ring (28) and against which, in the closed position of the valve pin (17), the sealing ring (28) is in abutment, closing off a valve through-passage in the process, and wherein, in the open position of the valve pin (17), the region (18) of reduced diameter is located in the region of the sealing ring (28).

## Revendications

1. Dispositif de réglage pour régler un composant, notamment un accoudoir de chaise, avec un ressort pneumatique comportant un cylindre (1) fermé au niveau de sa première extrémité et disposé de façon à pouvoir coulisser dans le piston (2), ledit piston divisant le cylindre (1) rempli avec un fluide sous surpression en une première et une deuxième chambre cylindrique (3, 4) et comportant unilatéralement une tige de piston (5) rentrant à travers la deuxième chambre cylindrique (4) opposée à l'extrémité fermée du cylindre (1) et amenée de façon étanchéifiée hors du cylindre (1), le piston (2) étant alimenté avec une force de poussée sortante par le biais de la surpression régnant dans la première chambre cylindrique (3), avec une liaison allant de la deuxième chambre cylindrique (4) à la première chambre cylindrique (3) et dans laquelle sont disposés une première soupape (14) et un canal d'étranglement de flux connecté en aval d'elle, ladite liaison permettant un écoulement de fluide étranglé de la deuxième dans la première chambre cylindrique (4, 3) et bloquant cet écoulement dans la direction d'écoulement opposée, **caractérisé par** une soupape de liaison (16) pouvant être actionnée à la main et permettant de relier entre elles la première et la deuxième chambre cylindrique (3, 4) et en ce qu'en cas de tige de piston (5) sollicitée dans la direction de poussée entrante et de soupape de liaison (16) fermée par la pression supérieure dans la première chambre cylindrique (3) à la pression régnant dans la deuxième chambre cylindrique (4), un élément de soupape de la première soupape (14) bloque le passage de la première soupape (14) de la première chambre cylindrique (3) jusqu'à la deuxième chambre cylindrique (4), le canal d'étranglement de commande étant réalisé sous la forme du canal de labyrinthe d'étranglement (26 à 26"').

2. Dispositif de réglage selon la revendication 1, **caractérisé en ce que** le canal de labyrinthe d'étranglement (26 à 26"') s'étend dans un ou plusieurs plans à angle droit par rapport à l'axe longitudinal du cylindre (1).

3. Dispositif de réglage selon la revendication 2, **caractérisé en ce que** le canal de labyrinthe d'étranglement (26 à 26"') s'étend concentriquement par rapport à l'axe longitudinal du cylindre (1).

4. Dispositif de réglage selon l'une quelconque des revendications précédentes, **caractérisé en ce que** le canal de labyrinthe d'étranglement (26 à 26"') est réalisé dans un élément d'étranglement (13 à 13"') de type à disque, une première extrémité du canal de labyrinthe d'étranglement (26 à 26"') étant reliée à la liaison (9, 10) conduisant à la soupape (14) et une deuxième extrémité du canal de labyrinthe d'étranglement (26 à 26"') débouchant en direction du côté de la première chambre cylindrique (3).

5. Dispositif de réglage selon la revendication 4, **caractérisé en ce que** plusieurs éléments d'étranglement (13 à 13"') de type disque formant un paquet d'éléments d'étranglement (12) sont disposés les uns derrière les autres dans le plan axial, la première extrémité du canal de labyrinthe d'étranglement (26 à 26"') étant respectivement reliée à la deuxième extrémité de l'élément d'étranglement placé devant dans la direction d'écoulement.

6. Dispositif de réglage selon l'une quelconque des revendications 4 et 5, **caractérisé en ce que** l'élément d'étranglement (13 à 13"') de type disque ou le paquet d'éléments étranglement (12) sont disposés dans un évidement (11) de type pot correspondant réalisé dans le piston (2).

7. Dispositif de réglage selon la revendication 6, **caractérisé en ce que** le canal de labyrinthe d'étranglement (26 à 26"') est réalisé dans une surface frontale réalisée sous la forme d'un canal de labyrinthe d'étranglement (26 à 26"') ouvert dans le plan axial fermé par le fond (29) de l'évidement (11) de type pot ou par un autre élément d'étranglement (13 à 13"') de type disque ou par un disque de recouvrement (30) supplémentaire reposant, dans le plan coaxial, contre l'élément d'étranglement (13"').

8. Dispositif de réglage selon l'une quelconque des revendications 6 et 7, **caractérisé en ce que** l'élément d'étranglement (13 à 13"') de type disque ou les éléments d'étranglement (13 à 13"') de type disque du paquet d'éléments étranglement (12) comportent une section transversale en forme de cercle et sont pourvus, au niveau de leur surface d'enveloppe périphérique dans le plan radial, d'une rainure annulaire (21) périphérique dans le plan radial dans laquelle une bague d'étanchéité (25) est insérée, ladite bague étant installée de façon étanche contre la paroi de la section transversale en forme de cercle correspondant à l'évidement (11) de type pot.

9. Dispositif de réglage selon l'une quelconque des revendications précédentes, **caractérisé en ce que** la soupape (14) comporte une rainure (6) périphérique dans le plan radial reliée à la première chambre cylindrique (3) au niveau de la surface d'enveloppe, périphérique dans le plan radial, du piston (2), dans laquelle une bague d'étanchéité (7) d'extension axiale davantage réduite que la rainure (6) est disposée de façon mobile dans le plan axial entre une première paroi latérale de rainure plus proche de la première chambre cylindrique (3) et une deuxième paroi latérale de rainure plus proche de la deuxième chambre cylindrique (4), ladite bague appuyant de façon étanche avec sa périphérie extérieure contre la paroi intérieure du cylindre (1) et formant entre sa périphérie intérieure et le fond de la rainure (6) une fente de bague à partir de laquelle la liaison est établie avec le canal de labyrinthe d'étranglement (26).

10. Dispositif de réglage selon l'une quelconque des revendications 4 à 9, **caractérisé en ce que** la soupape de liaison (16) comporte une chambre de soupape (15) réalisée dans le plan coaxial dans le piston (2), ladite chambre étant reliée à la deuxième chambre cylindrique (4) via un ou plusieurs canaux (22) et possédant une ouverture de soupape (23) orientée dans le plan coaxial par rapport à la première chambre cylindrique (3) pouvant être fermée par un élément de soupape pouvant être déplacé, à l'aide d'une tige de soupape (17) pouvant être actionnée à la main et pénétrant dans le plan coaxial la chambre de soupape (15), en direction de la première chambre cylindrique (3), de sa position de fermeture dans sa position d'ouverture, l'ouverture de soupape (23) étant reliée à la première chambre de travail (3), via un passage (32) coaxial, dans l'élément d'étranglement (13 à 13"') de type disque ou le paquet d'éléments étranglement (12).

11. Dispositif de réglage selon la revendication 10, **caractérisé en ce qu'**une rainure annulaire (27) périphérique dans le plan radial est disposée dans la paroi cylindrique de l'ouverture de soupape (23) dans laquelle une bague d'étanchéité (28) est insérée, la tige de soupape (17) comportant, dans la région de la chambre de soupape (15), un diamètre réduit par rapport à la chambre de soupape (15) et au niveau de sa région saillant dans l'ouverture de soupape (23), un diamètre correspondant approximativement au diamètre intérieur de la bague d'étanchéité (28) au niveau duquel, dans la position de fermeture de la tige de soupape (17), la bague d'étanchéité (28) est posée de façon à bloquer un passage de soupape et dans la position d'ouverture de la tige de soupape (17), la région (18) de diamètre réduit se trouvant dans la région de la bague d'étanchéité (28).
